# FASCICULE DE BREVET EUROPEEN

(11) **EP 3 138 620 B1**
(45) Date de publication et mention de la délivrance du brevet: **12.02.2020**
(21) Numéro de dépôt: 16184723.1
(22) Date de dépôt: 18.08.2016
(51) Int. Cl.: B01D 25/12, B01D 25/127, B01D 25/28

(54) **PROCÉDÉ DE FILTRATION DANS UN FILTRE-PRESSE À MEMBRANE**
FILTERVERFAHREN IN EINER MEMBRANFILTERPRESSE
FILTRATION METHOD IN A MEMBRANE FILTER PRESS

(30) Priorité: 21.08.2015 BE 201500208
(43) Date de publication de la demande: 08.03.2017
(73) Titulaire: Meura S.A., 7600 Péruwelz (BE)
(72) Inventeur: DE BRACKELEIRE, Christian, 1933 STERREBEEK (BE); SIMAL, Olivier, 1300 LIMAL (BE); THIROT, Michel, 7332 SIRAULT (BE)
(74) Mandataire: Office Freylinger

(56) Documents cités:
- EP-A1- 2 248 571
- WO-A1-2005/007266
- DE-A1- 2 503 674
- DE-A1- 3 504 152

## Description

La présente invention se rapporte aux filtres-presse, et en particulier aux filtres dits « à pression à membranes » pour la filtration d'une maische de brasserie, de distilleries ou d'industries de fabrication d'extraits. De la filtration résulte un gâteau compressible formé de moût et de drêches.

Pour la filtration d'une maische de brasserie ou de distillerie, il existe des filtres-presse dits « à plateaux » présentant une pluralité de plateaux verticaux assemblés les uns aux autres par leur cadre périphérique. Un milieu filtrant, généralement une toile souple, est tendu sur chaque plateau de manière à délimiter, de part et d'autre du milieu filtrant : une chambre de filtration, et une chambre de récolte du filtrat. Le milieu filtrant est fixé sur toute sa périphérie au plateau. Au fur et à mesure de la filtration, la maische à filtrer est introduite dans la chambre de filtration, un gâteau de filtration se forme sur le milieu filtrant et le mout est récolté dans la chambre de récolte puis s'écoule par les canaux de récolte.

En alternative aux filtres-presse à plateaux classiques, les filtres-presse dits « à pression à membrane » ont été développés dans les années 80, pour permettre la compression du gâteau de filtration. Ce type de filtre se caractérise par la présence d'une membrane élastique formant une paroi délimitant une chambre de compression et une chambre de filtration. L'introduction dans la chambre de compression d'un fluide auquel la membrane est imperméable, permet sous l'effet de la pression exercée par ce fluide, une compression du gâteau filtrant et l'expulsion du moût qui l'imprègne. Cette technologie de filtre à membrane permet l'amélioration des performances de lavage des gâteaux de filtration et l'amélioration de la déshydratation du gâteau résiduel pour une meilleure valorisation des drêches qui en résultent.

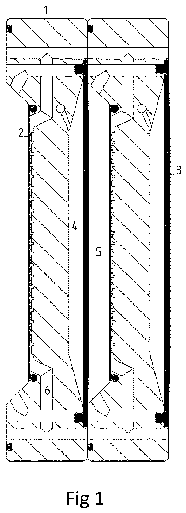

Des filtres de ce type sont décrits dans EP 0 674 929 et EP 2 248 571A. Les filtres comportent une alternance de cadres et de plateaux. Les cadres portent de part et d'autre une membrane flexible, et les plateaux portent de part et d'autre une toile filtrante. Sur la fig 1 de EP 2248571A, on peut observer une succession de 3 types de chambres : des chambres de filtration 1, s'étendant d'une toile filtrante 3 à la membrane flexible 6, des chambres de compression double 2 s'étendant entre deux membranes flexibles, de part et d'autre d'un cadre 5, et des chambres de récolte 13 entre la toile filtrante 3 et le plateau 4.

Un nouveau design a été récemment adopté et standardisé par le titulaire, pour les filtres-presse à pression à membrane. Selon ce design, illustré à la fig. 1, le filtre comporte une succession de plaques-support 1 identiques (dits éléments hybrides) assemblées par leur cadre périphérique. Chaque plaque-support 1 comporte d'un côté une toile filtrante 2 et de l'autre côté une membrane flexible 3. On forme alors une succession de demi-chambres de compression 4 ou chambres de compression simples, de chambres de filtration 5 et de chambres de récoltes 6,.

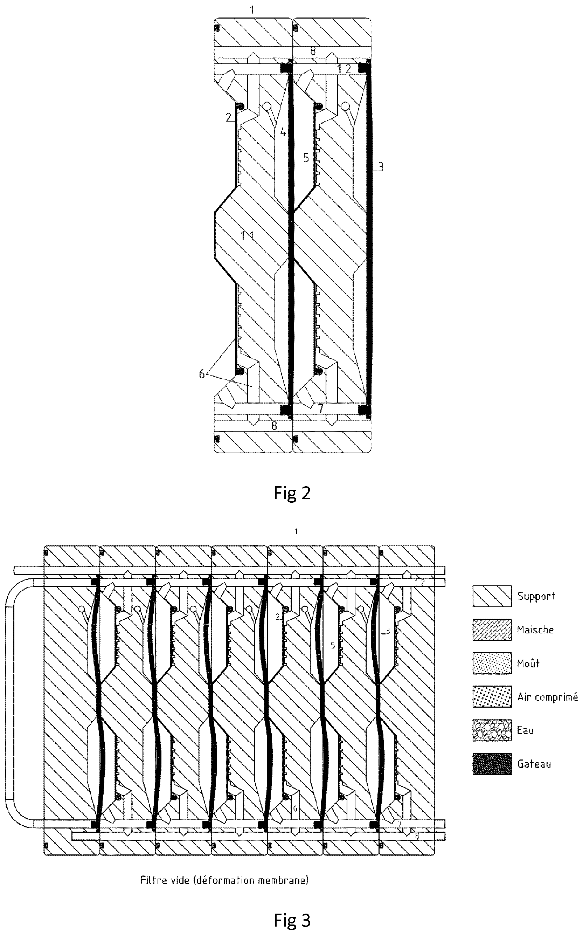

A la figure 2, le même type de filtre-presse est représenté avec un bossage central. Ce bossage est souvent utilisé pour les filtres de grande dimension qui atteignent généralement de l'ordre de 2 mètres de côté voire plus. Il est aussi possible de prévoir plusieurs bossages répartis sur la surface de chaque plateau. La fonction de ce(s) bossage(s) est de renforcer la stabilité mécanique des plateaux.

La présente invention concerne aussi bien les filtres-presse ne comportant pas de bossage central (fig 1), que les filtres-presse avec un seul bossage central (fig 2), que ceux avec plusieurs bossages (non représentés).

Il existe d'autres types de filtres presse qui ne s'apparentent pas à ceux concernés par la présente invention.

US 6,641,726 décrit encore un autre design comportant, en alternance, des cadres 40 portant des toiles filtrantes et des plateaux 30 portant les membranes flexibles. Dans ce design les plateaux ont une surface rectiligne, c'est-à-dire ne présentant pas de renfoncement central pour former la chambre de compression. Il n'y a donc pas de position intermédiaire pour les membranes flexibles au repos. Le passage de la position « contre le support » à la position « gonflée » implique une déformation importante des membranes et le retour à la position « contre le support » risque d'entrainer la formation de nombreux plis.

DE 35 04 152 décrit des filtres-presse à plateaux horizontaux. Ils ne comportent pas des toiles filtrantes fixes mais des courroies perforées, mobiles sur lesquels des gâteaux de filtration se déposent. Des membranes sont prévues du côté opposé à celui sur lequel se forme le gâteau. Le gonflement des membranes entraine la courroie dans un mouvement de flottement vertical ce qui engendre des difficultés de formation du gâteau de filtration.

Il n'y a pas de lavage du gâteau de filtration ; le but n'étant probablement pas de récupérer le filtrat mais le gâteau séché.

Dans les filtres-presse selon la présente invention, la déformation des membranes s'effectue généralement par gonflement avec de l'air injecté à faible pression dans la chambre de compression. Dans EP 2 248 571A, les inventeurs ont mis au point une compression avec de l'eau. Au début de l'étape de lavage, l'eau est retirée des chambres de compression pour être réintroduite dans les chambres de filtration de manière à garder un équilibre de pression de part et d'autre des membranes élastiques (col. 8, 1. 4-5).

On comprendra aisément que la membrane doit présenter certaines caractéristiques d'élasticité mais également être dimensionnée afin de permettre un déplacement depuis la position de repos à la position « en gonflage ».

Le cadre (ou plaque-support) portant la membrane comporte un bord périphérique, la membrane en position de repos n'est pas naturellement plaquée contre son support mais se trouve à mi-chemin entre la position gonflée et la position contre son support. Lorsque le cadre comporte un bossage central ou plusieurs bossages, elle est pincée à l'endroit de la surface du (des) bossage(s) mais flottante dans les autres zones. Ces membranes peuvent atteindre des poids de l'ordre de 15-20 kg. On comprendra que leur surdimensionnement, même léger, entraine des plissements, en particulier aux alentours des bossages.

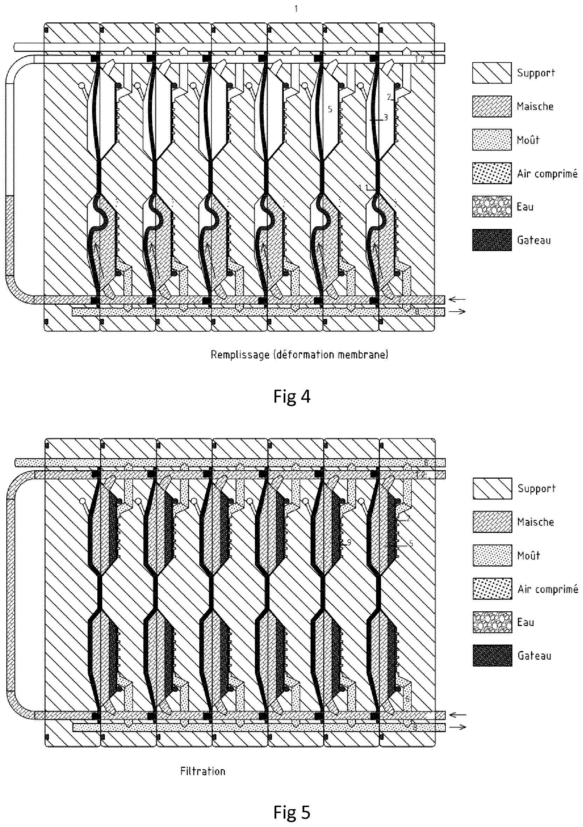

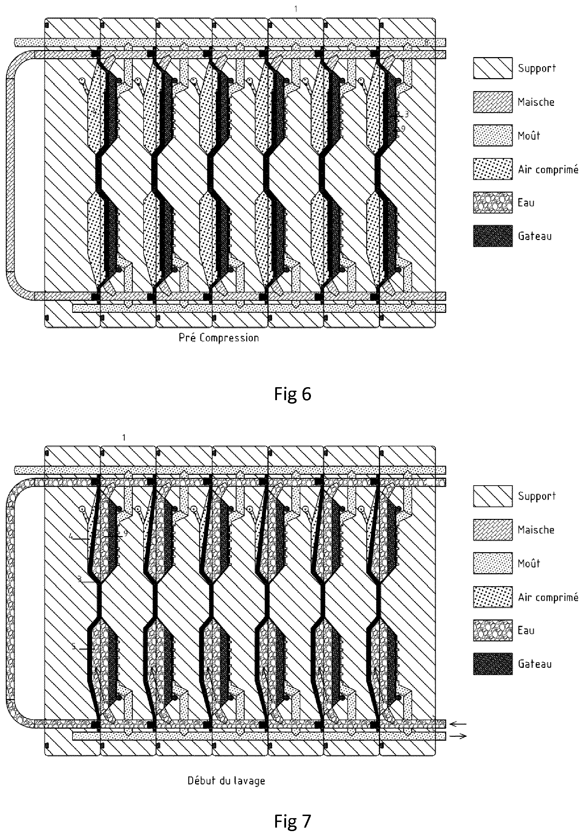

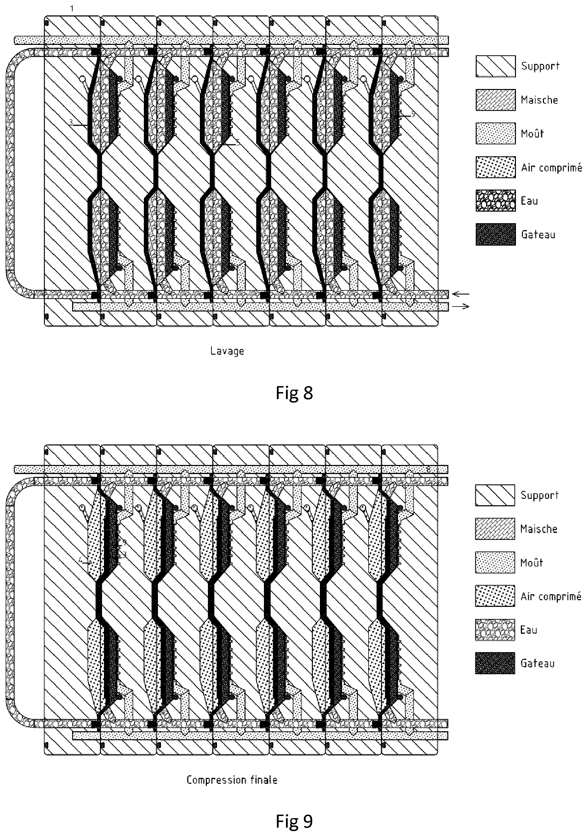

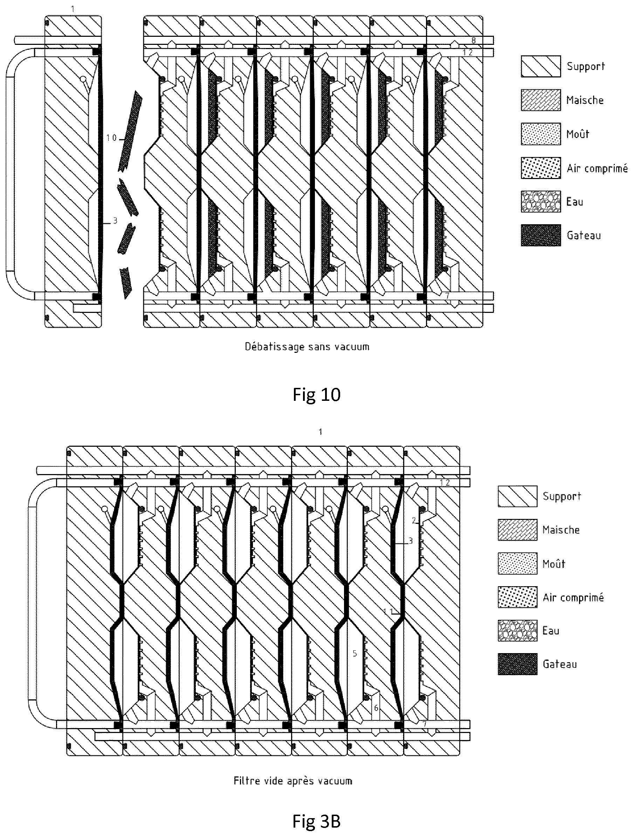

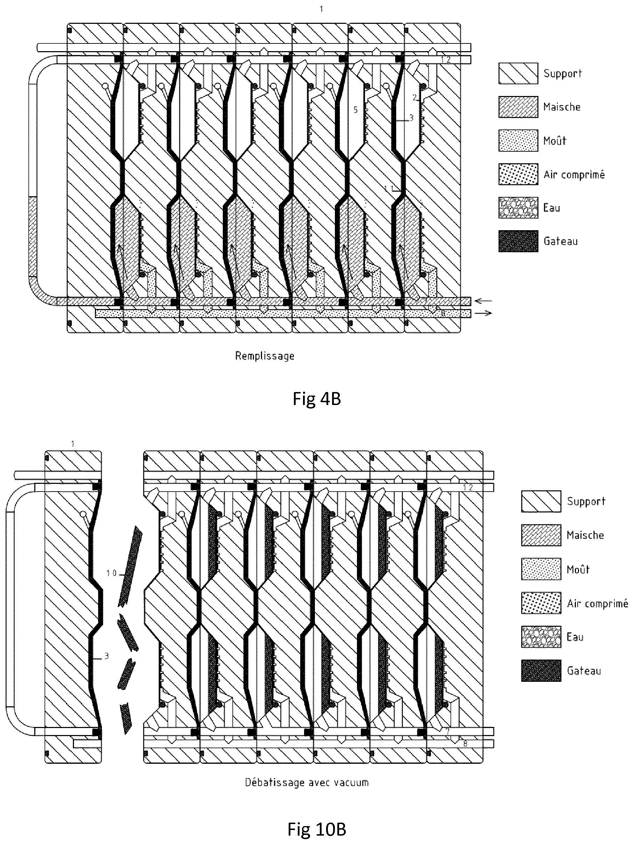

Pratiquement, un cycle de filtration de la maische est représenté aux figures 3 à 10, avec un design de filtre comportant des plaques-support telles que représentées à la fig. 2 Le cycle comprend les étapes suivantes :
1. Remplissage : Le filtre est vide au départ, les membranes 3 sont en position de « repos » (fig. 3). Elles ne sont pas plaquées contre la paroi 11 de leur support 1 mais, au vu de leur surdimensionnement, elles présentent un léger flottement entre leur point d'attache périphérique et le pincement par le bossage. La chambre de compression 4 contient du fluide de compression résiduel du cycle de filtration précédent. La maische est pompée dans le filtre pour remplir progressivement les chambres de filtration 5 via le canal d'entrée inférieur 7 (fig. 4). Durant cette étape, la pression exercée par le pompage de la maische positionne la membrane 3 contre sa plaque support 1 mais des plissements apparaissent qui peuvent aller jusqu'à une hernie. Le fluide de compression résiduel présent à l'arrière de la membrane 3 (chambre de compression 4) est évacué par la vanne de désaération de la rampe à air (non illustré).
2. Filtration (fig. 5) : La maische continue à alimenter les chambres de filtration 5 et est filtrée à travers la toile filtrante 2, sous une pression inférieure à 1 bar. Le moût est récolté à l'arrière des toiles 2, dans la chambre de récolte 6 et s'écoule par les canaux de collecte du filtrat 8. Un gâteau de filtration 9 se forme progressivement sur la toile filtrante 2.
3. Précompression (fig. 6): Une fois toute la maische pompée dans le filtre, et en préparation à l'étape de lavage, la chambre de compression 4 est remplie du fluide de compression ; la membrane 3 se gonfle, comprime le gâteau filtrant 9 et en expulse le moût qui l'imprègne. Lors de cette étape, la membrane 3 effectue un trajet depuis la position « collée sous pression sur son support » (fig. 4) jusqu'à la position gonflée, c'est-à-dire plaquée contre le gâteau 9, à l'opposé de son support
4. Début de lavage : Cette étape est délicate, car l'eau de lavage pompée progressivement dans les chambres de filtration 5 repousse les membranes 3 et évacue le gaz de compression des chambres de compression 4 tout en devant maintenir la pression sur les gâteaux filtrants 9. Les membranes 3 passent progressivement de leur position gonflée à leur position contre leur support 1 (fig. 7).
5. Lavage : La fig. 8 illustre la situation une fois les chambres de filtration 5 remplies de l'eau de lavage et les membranes 3, sous l'effet de la pression, repositionnées sur leur support 1. L'eau de lavage continue à être introduite par les canaux d'entrée inférieurs 7 et/ou les canaux d'entrée supérieurs 12 et percole à travers le gâteau filtrant 9 pour récupérer l'extrait présent dans la porosité de ce dernier. Cette opération se termine une fois un certain volume de lavage passé ou une fois l'extrait minimum mesuré par un densimètre.
6. Compression finale (fig. 9): En fin de lavage, la chambre de compression 4 est à nouveau remplie d'air ou d'un autre fluide afin de gonfler les membranes 3. Le but de cette dernière opération est de déshydrater un maximum le gâteau de filtration 9 avant débâtissage. En fin d'étape de compression, les vannes de désaération de la rampe à air sont ouvertes de sorte que les chambres de compression 4 sont vidées et les membranes 3 reviennent à leur position de repos.
7. Débâtissage : Les éléments du filtre sont ouverts afin de permettre le débâtissage (fig. 10) des gâteaux appelés « drêches » 10. Dans cette position de repos, les membranes 3 ne sont pas contre leur support 1.

Une des problématiques relative à ce type de filtre à membranes concerne la mise en position correcte des membranes de la position « gonflée » (fig. 6 et 9) ou de repos (fig. 3) à la position « en pression » (fig. 5 et 8).

Les fig. 4 et 7 montrent le passage délicat d'une position à l'autre.

Afin de permettre une déformation suffisante des membranes, celles-ci doivent présenter une élasticité bien définie et peuvent être légèrement surdimensionnées par rapport aux dimensions du cadre de l'élément qui les contient.

Lors du remplissage du filtre avec la maische (fig. 4) ou l'eau de lavage (fig. 7), la membrane 3 plaquée sur son support 1 sous l'effet de la pression exercée par le pompage ne se repositionne pas toujours correctement, avec comme conséquence la formation de plis.

A l'étape de pré-compression, la membrane contribue à l'uniformité de la porosité du gâteau, élément essentiel pour un lavage ultérieur optimal de celui-ci. Si la membrane présente des plis, ils s'incrustent dans le gâteau de filtration 9 sous l'effet de la pression et forment des voies de passage préférentiels ; ce qui rend le lavage du gâteau non homogène et par conséquent non efficace.

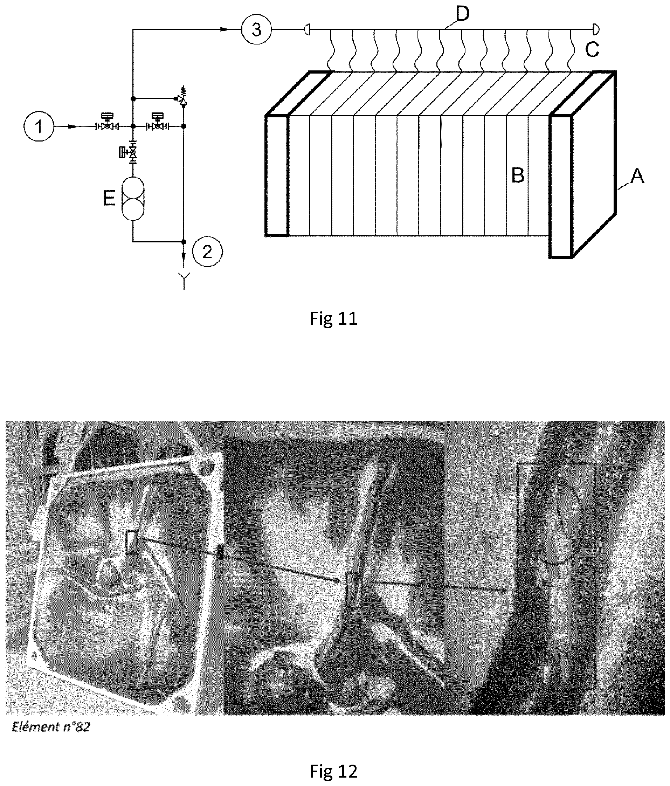

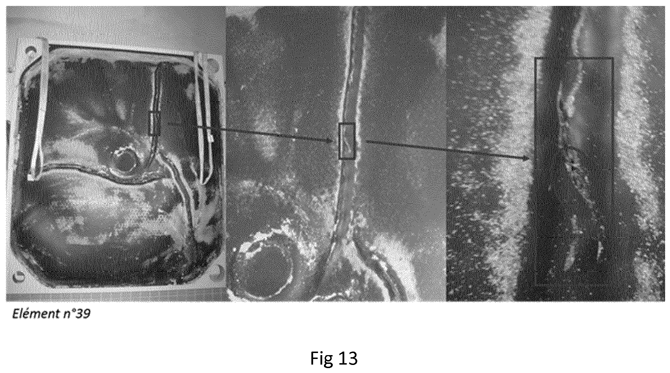

Les Fig. 12 et 13 sont des photographies d'une plaque support avec sa membrane flexible 3, d'un filtre-presse selon l'état de la technique, avec agrandissements sur la zone du pli. On voit très bien le bossage central et juste en dessous, la formation d'un pli s'accentue à cet endroit, formant une sorte de vague. On voit très bien que les plis sont une source de fragilisation des membranes et à la longue un risque de rupture.

En cas de rupture prématurée, des problèmes majeurs apparaissent. La nécessité de remplacer les membranes endommagées occasionne des coûts (prix des membranes, coût de la main-d'œuvre et du temps d'arrêt de production). Un autre problème majeur est que si la rupture d'une membrane a lieu en cours de cycle, il peut y avoir une contamination du circuit d'air de compression par la maische ou par l'eau de lavage.

Afin de pallier cette problématique, les inventeurs ont été amenés à améliorer le procédé de filtration.

Préalablement aux étapes de remplissage et de lavage sous pression, ils ont découvert qu'il est possible de forcer la membrane à se positionner correctement sur son support, sans formation de plis, par un effet d'aspiration ou vide forcé à l'arrière de la membrane, dans la chambre de compression. De cette manière, il est possible de tendre les membranes en évitant la formation de plis et de les plaquer complètement sur leur support.

Techniquement, il est nécessaire de prévoir un aspirateur ou pompe à vide, à placer au niveau du circuit d'air des chambres de compression 4.

L'aspiration est mise en fonctionnement avant le remplissage du filtre en début de cycle, et éventuellement pendant ou après évacuation du gaz de compression (début de lavage), avant l'étape de lavage proprement dite. Elle peut aussi être mise en fonctionnement avant débâtissage.

La présente invention a pour objet un procédé de filtration à l'aide d'un filtre-presse à membrane constitué d'un assemblage d'éléments, en particulier verticaux formant des chambres de filtration, chambres de récolte et des chambres de compression ; une membrane flexible séparant une chambre de filtration de la chambre de compression suivante de telle sorte que chaque chambre de compression soit délimitée d'un côté par la membrane flexible et de l'autre côté par la paroi de l'élément sur lequel elle est fixée ; chaque chambre de filtration étant délimitée d'un côté par la membrane flexible et de l'autre côté par un milieu filtrant ; le procédé comportant au moins les étapes suivantes :
a) aspiration du gaz contenu dans chaque chambre de compression de manière à positionner la membrane flexible contre la paroi de l'élément sur lequel elle est fixée ;
b) alimentation progressive de chaque chambre de filtration par la suspension à filtrer ;
c) filtration progressive au travers du milieu filtrant, formation d'un gâteau de filtration et récolte du filtrat dans la chambre de récolte;
d) remplissage des chambres de filtration (5) par un fluide de lavage
e) lavage du gâteau de filtration avec le fluide de lavage ;
f) compression du gâteau de filtration par la membrane flexible ;
g) débâtissage et élimination des gâteaux lavés.

Généralement, une pré-compression est effectuée après l'étape de filtration c), de manière à expulser le moût qui imprègne le gâteau et à homogénéiser la porosité du gâteau de filtration avant l'étape de remplissage des chambres de filtration par le fluide de lavage. Un gaz de compression est introduit dans la chambre de compression et la membrane est gonflée, contre le gâteau de compression.

De manière avantageuse, après l'étape de pré-compression, le liquide de lavage est introduit progressivement dans la chambre de filtration tout en maintenant une pression sur les gâteaux de filtration. En même temps, le gaz de compression est expulsé de la chambre de compression.

De manière encore plus efficace, pendant l'introduction du liquide de lavage et avant l'étape de lavage, le gaz de compression restant dans la chambre de compression est aspiré de manière à repositionner la membrane flexible, sans pli, contre la paroi de l'élément sur lequel elle est fixée.

Avantageusement, le gaz de compression est aussi aspiré des chambres de compression en fin d'étape de compression et avant l'étape de débâtissage.

D'autres particularités de l'invention sont décrites dans les sous-revendications.

### EXEMPLE DE REALISATION

Un cycle de filtration selon l'invention est décrit ci-dessous en référence aux figures 3, 5, 6, 7, 8, 9, ainsi qu'aux figures supplémentaires 3B, 4B , 10B et 11. Les fig 4B et 10B remplacent respectivement les figures 4 et 10. Un cycle comprend les étapes suivantes :
1. Placage de la membrane sur le support 1
   Le filtre est vide au départ, les membranes 3 sont en position de « repos » (fig. 3). Une aspiration de l'air contenu dans chaque chambre de compression 4 est ensuite réalisée grâce à un aspirateur ou pompe à vide (fig. 11). Le vide est ainsi réalisé à l'arrière de chaque membrane 3, ce qui les positionne, sans pli, sur leur plaque-support 1. (fig. 3B)
2. Remplissage
   La maische est pompée dans le filtre pour remplir progressivement les chambres de filtration 5 (fig. 4B).
3. Filtration (fig. 5 identique)
   Le filtre est rempli et la maische est filtrée à travers la toile filtrante 2 sous une pression inférieure à 1 bar, le moût est récolté à l'arrière des toiles 2, dans la chambre de récolte 6 et collecté par les canaux de récolte du moût 8. Un gâteau de filtration 9 se forme progressivement sur la toile filtrante 2.
4. Précompression (fig. 6 identique)
   Une fois toute la maische pompée dans le filtre, et en préparation à l'étape de lavage, la chambre de compression 4 est remplie d'air, la membrane 3 se gonfle, comprime le gâteau filtrant 9 et en expulse le moût qui l'imprègne. Lors de cette étape, la membrane 3 effectue un trajet depuis la position « collée sous pression sur son support » (fig. 5) jusqu'à la position gonflée, c'est-à-dire plaquée contre le gâteau 9, à l'opposé de son support 1.
5. Début de lavage
   L'eau de lavage est pompée progressivement dans les chambres de filtration 5, repousse les membranes 3 et évacue l'air des chambres de compression 4. Les membranes passent progressivement de leur position gonflée à leur position contre leur support tout en devant maintenir la pression sur les gâteaux filtrants 9 (fig. 7 inchangée).
6. Placage de la membrane sur le support 1
   Pendant l'étape précédente (début de lavage) et éventuellement après cette étape, une aspiration de l'air contenu dans chaque chambre de compression 4 est réalisée grâce à un aspirateur ou pompe à vide (fig. 11). L'air est évacué par la vanne de désaération de la rampe à air. Le vide est ainsi réalisé à l'arrière de chaque membrane 3, ce qui les positionne, sans pli, sur leur plaque-support 1.
7. Lavage
   Les membranes 3 sont déjà en position plaquée contre leur support, l'eau de lavage pompée dans le filtre rempli simplement la chambre de filtration 5. La fig. 8 montre la situation lorsque les chambres de filtration 5 sont complètement remplies d'eau de lavage. Tout comme dans l'état de la technique, l'eau de lavage percole à travers le gâteau filtrant 9 puis à travers la toile filtrante 2, pour récupérer l'extrait présent dans la porosité du gâteau 9. Cette opération se termine une fois un certain volume de lavage passé ou une fois l'extrait minimum mesuré par un densimètre.
8. Compression finale (fig. 9)
   En fin de lavage, comme dans l'état de la technique, la chambre de compression 4 est à nouveau remplie d'air afin de gonfler les membranes 3. Le but de cette dernière opération est de déshydrater un maximum le gâteau de filtration 9 avant débâtissage. Comme selon l'état de la technique, en fin d'étape de compression, les vannes de désaération de la rampe à air sont ouvertes de sorte que les chambres de compression 4 sont vidées et les membranes 3 reviennent à leur position de repos.
9. Placage de la membrane sur le support 1
   Une aspiration de l'air contenu dans chaque chambre de compression 4 peut encore être réalisée à ce stade. L'air est à nouveau évacué par la vanne de désaération de la rampe à air. Chaque membrane 3, est ainsi repositionnée, sans pli, sur sa plaque-support 1, avant débâtissage (fig. 10B).
10. Débâtissage
   Les éléments du filtre sont ouverts afin de permettre le débâtissage (fig. 10B) des gâteaux appelés « drêches » 10. Une fois l'opération terminée le filtre est refermé pour le début du cycle suivant.

La figure 11 illustre le principe de base du circuit d'air, modifié par l'ajout d'une pompe à vide. Un filtre presse A, comportant une succession d'éléments hybrides B, y sont représentés schématiquement. Une rampe à air D, alimente chaque élément hybride par l'intermédiaire de connexions individuelles C. Par le point 3, la rampe à air D est alimentée et déchargée en gaz de compression. Le circuit d'air comporte une entrée 1, une décharge 2 et une pompe à vide E.

La pompe à vide E est précédée d'une vanne, de préférence une vanne à trois voies NO (non ouverte) (non illustrée) qui met le circuit en dépression ou remet le circuit à pression atmosphérique en maintenant la pompe en fonctionnement pendant les opérations de basculement, l'arrêt de la pompe étant déterminé par la consigne d'un capteur de pression.

Il a été découvert qu'un vide de faible pression négative permet déjà le placage correct et complet des membranes sur leur support, de préférence de -150 à -350 mbar, préférentiellement de -200 mbar à -300 mbar.

Les filtres-presse industriels de dimensions 2000mm^{∗}1800mm présentent un volume d'environ 50L à l'arrière de chaque demi-chambre de compression.

En exemple un test est réalisé sur un filtre de 10 éléments industriels hybrides. Le circuit d'air alimentant les chambres de compression a été connecté à une pompe à vide de puissance moteur de 4KW, permettant des pressions de vide de max -300 mbar et des débits de max 400 m³/heure.

A l'aspiration de la pompe, une vanne à 3 voies NO (non ouverte) permet la mise en dépression ou retour à pression atmosphérique du circuit. L'ouverture ou fermeture de la vanne 3 voies est pilotée par un capteur de pression dont le point de consigne a été fixé à - 300 mbar. L'arrêt de la pompe est réalisé quelques secondes après détection de la position NO (non-ouverte de la vanne). Le test a montré un plaquage parfait de l'ensemble des dix membranes sur leur support respectif en un temps de 15 à 20 secondes et pour un vide de - 290 mbar. Après ouverture de la vanne 3 voies, la remise en position de repos des membranes a été observée après 60 secondes environ. A noter que si la vanne reste fermée, un léger vide persiste (inférieur à -20 mbar après 1h05) et est suffisant pour éviter la reformation de plis.

L'extrapolation à un filtre de 168 chambres indique que l'étape de plaquage des membranes sur leur support aura une durée maximale de 5 minutes pour une pompe à vide de même puissance. Cette étape n'aura pas d'impact sur le temps de cycle total de la filtration de maische étant donné qu'elle peut être effectuée en temps masqué durant les différentes étapes du cycle.

L'exemple a été décrit pour un filtre-presse « nouveau design », comportant une succession de plaques-support identiques qui portent d'un côté une toile filtrante et de l'autre côté une membrane flexible. Bien entendu, le procédé selon l'invention s'applique également aux filtres-presse traditionnels comportant une alternance de plateaux portant des toiles filtrantes et de cadres portant des membranes flexibles.

Les inventeurs ont constaté que ce procédé permet d'éviter la fissuration des membranes et la contamination du gaz de compression. La durée de vie des membranes s'est trouvée considérablement allongée et les risques de contamination ont été évités.

## Revendications

1. Procédé de filtration à l'aide d'un filtre-presse à membrane constitué d'un assemblage d'éléments formant des chambres de filtration (5), chambres de récolte (6) et des chambres de compression (4); une membrane flexible (3) séparant une chambre de filtration (5) de la chambre de compression (4) suivante de telle sorte que chaque chambre de compression (4) soit délimitée d'un côté par la membrane flexible (3) et de l'autre côté par la paroi (11) de l'élément sur lequel elle est fixée ; chaque chambre de filtration (5) étant délimitée d'un côté par la membrane flexible (3) et de l'autre côté par un milieu filtrant (2) ;
le procédé comportant un ou plusieurs cycle de filtration ; chaque cycle comportant au moins les étapes suivantes :
a) aspiration du gaz contenu dans chaque chambre de compression (4) de manière à positionner la membrane flexible (3) contre la paroi (11) de l'élément sur lequel elle est fixée ;
b) alimentation progressive de chaque chambre de filtration (5) par la suspension à filtrer ;
c) filtration progressive au travers du milieu filtrant (2), formation d'un gâteau de filtration (9) et récolte du filtrat dans la chambre de récolte (6);
d) remplissage des chambres de filtration (5) par un liquide de lavage ;
e) lavage du gâteau de filtration (9) avec le fluide de lavage ;
f) remplissage des chambres de compression (4) par un gaz de compression de manière telle que les membranes (3) soient pressées contre les gâteaux de filtration (9).
g) débâtissage et élimination des gâteaux lavés ;

2. Procédé suivant la revendication précédente, **caractérisé en ce qu'**il comporte, après l'étape de filtration c), et avant l'étape de remplissage des chambres de filtration (5) par le liquide de lavage d), une étape de pré-compression du gâteau filtrant (9) par la membrane flexible (3), gonflée par un gaz de compression.

3. Procédé suivant l'une quelconque des revendications précédentes, **caractérisé en ce qu'**il comporte, pendant ou après l'étape de remplissage des chambres de filtration (5) par le liquide de lavage, une étape d'aspiration du gaz de compression contenu dans la chambre de compression (4) ; de manière à plaquer la membrane flexible (3) contre la paroi (11) de l'élément sur lequel elle est fixée.

4. Procédé suivant l'une quelconque des revendications précédentes, **caractérisé en ce qu'**il comporte, après l'étape f) de compression finale et avant l'étape g) de débâtissage, une étape d'aspiration du gaz de compression contenu dans la chambre de compression (4) ; de manière à plaquer la membrane flexible (3) contre la paroi (11) de l'élément sur lequel elle est fixée.

5. Procédé selon l'une quelconque des revendications précédentes, **caractérisé en ce que** le gaz de compression est un gaz non condensable à la température de travail.

6. Procédé selon l'une quelconque des revendications précédentes, **caractérisé en ce que** le gaz de compression est de l'air.

7. Procédé selon l'une quelconque des revendications précédentes, **caractérisé en ce que** les chambres de compression (4) sont reliées à un circuit permettant l'alimentation et la décharge du gaz de compression des chambres de compression.

8. Procédé selon la revendication précédente, **caractérisé en ce que** le circuit d'alimentation et de décharge des chambres de compression comprend un dispositif d'aspiration du gaz de compression (E), une rampe à air (D) et des connections individuelles (C), alimentant chaque chambre de compression (4).

9. Procédé selon la revendication précédente, **caractérisé en ce que** le dispositif d'aspiration du gaz de compression permet une pression de vide dans les chambres de compression (4) comprise entre -150 mbars et -350 mbars.

10. Procédé selon la revendication précédente, **caractérisé en ce que** le dispositif d'aspiration du gaz de compression permet une pression de vide dans les chambres de compression (4) comprise entre -200 mbars et -300 mbars.

11. Procédé selon l'une quelconque des revendications précédentes, **caractérisé en ce que** les éléments du filtre-presse sont des plateaux-support (1) portant d'un côté une toile filtrante (2) et de l'autre côté une membrane flexible (3).

12. Procédé selon l'une quelconque des revendications 1 à 10, **caractérisé en ce que** les éléments du filtre-presse sont des plateaux et des cadres, en alternance ; chaque plateau portant une toile filtrante de part et d'autre et chaque cadre portant une membrane flexible, de part et d'autre.

13. Procédé selon l'une quelconque des revendications 11 et 12, **caractérisé en ce que** la toile filtrante (2) est fixée par sa périphérie sur les plateaux ou plateaux-support (1).

14. Procédé selon l'une quelconque des revendications précédentes, **caractérisé en ce que** les éléments du filtre-presse, soit les plateaux-support (1), soit les cadres et les plateaux, sont verticaux.

## Patentansprüche

1. Filterverfahren mittels einer Membranfilterpresse, bestehend aus einer Montage von Elementen, die Filterkammern (5), Sammelkammern (6) und Druckkammern (4) bilden; wobei eine flexible Membrane (3) eine Filterkammer (5) von der nächsten Druckkammer (4) trennt, sodass jede Druckkammer (4) auf der einen Seite durch die flexible Membrane (3) und auf der anderen Seite durch die Wand (11) des Elementes, an dem sie befestigt ist, abgegrenzt ist; wobei jede Filterkammer (5) auf der einen Seite durch die flexible Membrane und auf der anderen Seite durch ein Filtermedium (2) abgegrenzt ist;
wobei das Verfahren einen oder mehrere Filtrationszyklen umfasst; wobei jeder Zyklus zu mindestens die folgenden Schritte umfasst:
a) Absaugen des in jeder Druckkammer (4) enthaltenen Gases zur Positionierung der flexiblen Membrane gegen die Wand (11) des Elementes, an dem sie befestigt ist;
b) schrittweise Versorgung jeder Filterkammer (5) mit der zu filtrierenden Suspension;
c) schrittweise Filtration durch das Filtermedium (2), Bildung eines Filterkuchens (9) und Sammeln des Filtrats in der Sammelkammer (6);
d) Füllung der Filterkammern (5) mit einer Waschflüssigkeit;
e) Anschwänzen des Filterkuchens (9) mit dem Anschwänzfluid;
f) Füllung der Druckkammern (4) mit einem Druckgas, sodass die Membranen (3) gegen die Filterkuchen (9) gepresst werden;
g) Ablösen und Entfernung der angeschwänzten Kuchen.

2. Verfahren nach dem vorhergehenden Anspruch **dadurch gekennzeichnet, dass** es, nach dem Filtrationsschritt c) und vor dem Schritt zur Füllung der Filterkammern (5) mit der Anschwänzflüssigkeit d), einen Schritt zur Vorverdichtung des Filterkuchens (9) mit der flexiblen Membrane (3) umfasst, die mit einem Druckgas aufgeblasen wird.

3. Verfahren nach einem der vorhergehenden Ansprüche **dadurch gekennzeichnet, dass** es während des Schrittes oder nach dem Schritt zur Füllung der Filterkammern (5) mit dem Anschwänzflüssigkeit, einen Schritt zum Absaugen des in der Druckkammer (4) enthaltenen Druckgases umfasst; sodass die flexible Membrane (3) gegen die Wand (11) des Elementes gedrückt wird, an dem sie befestigt ist.

4. Verfahren nach einem der vorhergehenden Ansprüche **dadurch gekennzeichnet, dass** es, nach dem Schritt f) zur endgültigen Pressung und vor dem Ablöseschritt g), einen Schritt zur Absaugung des in der Druckkammer (4) enthaltenen Druckgases umfasst; sodass die flexible Membrane (3) gegen die Wand (11) des Elementes gedrückt wird, an dem sie befestigt ist.

5. Verfahren nach einem der vorhergehenden Ansprüche **dadurch gekennzeichnet, dass** das Druckgas ein an der Arbeitstemperatur nicht kondensierbares Gas ist.

6. Verfahren nach einem der vorhergehenden Ansprüche **dadurch gekennzeichnet, dass** das Druckgas Luft ist.

7. Verfahren nach einem der vorhergehenden Ansprüche **dadurch gekennzeichnet, dass** die Druckkammer (4) mit einem Kreislauf verbunden werden, die die Versorgung und die Entsorgung des Druckgases der Druckkammern ermöglicht.

8. Verfahren nach dem vorhergehenden Anspruch **dadurch gekennzeichnet, dass** der Kreislauf zur Versorgung und Entsorgung der Druckkammern eine Vorrichtung zur Absaugung des Druckgases (E), eine Luftrampe (D) und einzelne Anschlüsse, die jede Druckkammer (4) versorgen, umfasst.

9. Verfahren nach dem vorhergehenden Anspruch **dadurch gekennzeichnet, dass** die Vorrichtung zur Absaugung des Druckgases einen Vakuumdruck in den Druckkammern (4) zwischen -150 mbar und - 350 mbar ermöglicht.

10. Verfahren nach dem vorhergehenden Anspruch **dadurch gekennzeichnet, dass** die Vorrichtung zur Absaugung des Druckgases einen Vakuumdruck in den Druckkammern (4) zwischen - 200 mbar und - 300 mbar ermöglicht.

11. Verfahren nach einem der vorhergehenden Ansprüche **dadurch gekennzeichnet, dass** die Filterpresselemente Trägerplatten sind (1), die auf der einen Seite ein Filtertuch (2) und auf der anderen Seite eine flexible Membrane (3) tragen.

12. Verfahren nach einem der Ansprüche 1 bis 10 **dadurch gekennzeichnet, dass** die Filterpresselemente abwechselnd Platten und Rahmen sind; wobei jede Platte beiderseits ein Filtertuch trägt, und jeder Rahmen beiderseits eine flexible Membrane trägt.

13. Verfahren nach einem der Ansprüche 11 und 12 **dadurch gekennzeichnet, dass** das Filtertuch (2) über seinen Umfang an die Platten bzw. die Trägerplatten (1) befestigt ist.

14. Verfahren nach einem der vorhergehenden Ansprüche **dadurch gekennzeichnet, dass** die Filterpresselemente, entweder die Trägerplatten oder die Rahmen und die Platten, senkrecht sind.

## Claims

1. Filtration method by means of a membrane filter press comprised of an assembly of elements forming filtration chambers (5), collecting chambers (6) and compression chambers (4); a flexible membrane (3) separating a filtration chamber (5) from the next compression chamber (4) so that each compression chamber (4) is delimited on one side by the flexible membrane (3) and on the other side by the wall (11) of the element it is attached to; each filtration chamber (5) being delimited by the flexible membrane (3) on one side and by a filter medium (2) on the other side;
wherein the method comprises one or more filtration cycles; each cycle comprising at least following steps:
a) suction of the gas contained in each compression chamber (4) so as to position the flexible membrane against the wall (11) of the element it is attached to;
b) progressive feeding of each filtration chamber (5) with the suspension to be filtered;
c) gradual filtration through the filter medium (2), formation of a filter cake (9) and collecting the filtrate in the collecting chamber (6);
d) filling the filtration chambers (5) with a sparging liquid;
e) sparging the filter cake (9) with the sparging fluid;
f) filling the compression chambers (4) with a compression gas in such a way that the membranes (3) are pressed against the filter cakes (9);
g) discharging and removal of the sparged filter cakes.

2. Filtration method of the preceding claim, **characterized in that** it comprises, after filtration step c), and before the step of filling the filtration chambers (5) with the sparging liquid d), a filter cake (9) pre-compression step with the flexible membrane (3), inflated by a compression gas.

3. Method of any preceding claims, **characterized in that** it comprises during or after the step of filling the filtration chambers (5) with the sparging liquid, a step of sucking the compression gas contained in the compression chamber (4); so as to press the flexible membrane (3) against the wall (11) it is attached to.

4. Method of any preceding claims, **characterized in that** it comprises, after final compression step f) and before discharging step g), a step of sucking the compression gas contained in the compression chamber (4); so as to press the flexible membrane (3) against the wall (11) it is attached to.

5. Method of any preceding claims, **characterized in that** the compression gas is a gas non condensable at the working temperature.

6. Method of any preceding claims, **characterized in that** the compression gas is air.

7. Method of any preceding claims, **characterized in that** the compression chambers (4) are connected to a circuit enabling to feed and to discharge the compression gas of the compression chambers.

8. Method of the preceding claim, **characterized in that** the circuit for feeding and discharging of the compression chambers comprises a compression gas suction device (E), an air ramp (D) and individual connections (C) feeding each compression chamber (4).

9. Method of the preceding claim, **characterized in that** the compression gas suction device enables a vacuum pressure in the compression chambers (4) comprised between - 150 mbars and -350 mbars.

10. Method of the preceding claim, **characterized in that** the compression gas suction device enables a vacuum pressure in the compression chambers (4) comprised between - 200 mbars and -300 mbars.

11. Method of any preceding claims, **characterized in that** the filter press elements are support plates (1) bearing a filter cloth (2) on one side and a flexible membrane (3) on the other side.

12. Method of any claims 1 to 10, **characterized in that** the filter press elements are plates and frames alternately; each plate bearing a filter cloth on both sides and each frame bearing a flexible membrane on both sides.

13. Method of any claims 11 and 12, **characterized in that** the filter cloth (2) is attached via its periphery to the plates or support plates (1).

14. Method of any preceding claims, **characterized in that** the filter press elements, either the support plates (1) or the frames and the plates, are vertical.
